(19) Europäisches Patentamt European Patent Office Office européen des brevets

(11) **EP 3 974 274 B1**

(12) **EUROPEAN PATENT SPECIFICATION**

(45) Date of publication and mention of the grant of the patent:
**19.07.2023 Bulletin 2023/29**

(21) Application number: **21198366.3**

(22) Date of filing: **22.09.2021**

(51) International Patent Classification (IPC):
**B60W 30/14** *(2006.01)* **B62K 23/04** *(2006.01)*
**B60W 50/14** *(2020.01)*

(52) Cooperative Patent Classification (CPC):
**B60W 30/146; B62J 45/20; B62J 50/22;**
**B62K 11/14; B62K 23/04; B62M 7/02;**
B60W 2050/146; B60W 2300/36; B60W 2510/10;
B60W 2510/1005; B60W 2520/18; B60W 2540/103;
B60W 2540/106; B60W 2710/1055

(54) **MOTORCYCLE**

MOTORRAD

MOTOCYCLETTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.09.2020 JP 2020159641**

(43) Date of publication of application:
**30.03.2022 Bulletin 2022/13**

(73) Proprietor: **Yamaha Hatsudoki Kabushiki Kaisha Iwata-shi, Shizuoka 438-8501 (JP)**

(72) Inventors:
• **KIKUCHI, Sahiro**
  **Iwata-shi, 438-8501 (JP)**
• **KATO, Akikazu**
  **Iwata-shi, 438-8501 (JP)**
• **YAMANE, Hayato**
  **Iwata-shi, 438-8501 (JP)**
• **NAKAGAWA, Yoshitomi**
  **Iwata-shi, 438-8501 (JP)**
• **HORIUCHI, Tomoki**
  **Iwata-shi, 438-8501 (JP)**
• **YAGI, Toshiki**
  **Iwata-shi, 438-8501 (JP)**

(74) Representative: **Di Sciuva, Michele et al Studio Torta S.p.A. Via Viotti, 9 10121 Torino (IT)**

(56) References cited:
EP-A1- 2 241 498    DE-A1-102014 017 522
US-A1- 2007 293 103    US-A1- 2018 354 515

**Description**

TECHNICAL FIELD

The present invention relates to a motorcycle including a speed limiter that limits vehicle speed such that the vehicle speed does not exceed an upper limit.

BACKGROUND ART

Conventionally, motorcycles capable of executing control that causes a motorcycle to travel at constant speed without an operation of an accelerator grip by a rider (that is, cruise control) have been known. For example, in Japanese Patent Application Publication No. 2010-247681, such a motorcycle is described.

Motorcycles which include a speed limiter have been known. For example, in Japanese Patent Application Publication No. 2009-257270, such a motorcycle is described. In speed limit control executed by a speed limiter, when vehicle speed is less than an upper limit, an engine output is caused to increase as an operation amount of an accelerator grip increases and, when the vehicle speed reaches the upper limit, the engine output is suppressed even when the operation amount of the accelerator grip is large.

SUMMARY OF THE INVENTION

TECHNICAL PROBLEM

A rider can release either of cruise control or speed limit control during traveling of a motorcycle. For example, the rider can release the cruise control or the speed limit control by pressing a button of a switch box.

Incidentally, in the cruise control, the rider does not operate an accelerator grip. Releasing of the cruise control is performed regardless of an operation of the accelerator grip. On the other hand, in the speed limit control, the rider operates the accelerator grip both before and after releasing the speed limit control. In releasing the speed limit control, depending on a situation of operating the accelerator grip by the rider, it is difficult for the rider to press the button in some cases. Moreover, as compared to an automobile, in a motorcycle, a behavior of a vehicle body more quickly follows an accelerator operation. There is a probability that, if an operation of the accelerator grip is temporarily stopped when the rider presses the button, a riding feeling is deteriorated. Therefore, it is preferable that the speed limit control can be released in conjunction with the operation of the accelerator grip.

US-A-2018/354515 discloses a motorcycle according to the preamble of claim 1. In particular, US-A-2018/354515 discloses a method of operating an auto-braking system of a vehicle in coordination with operation of a speed limiting system SLS of the vehicle to prevent undesired loss of auto-braking functionality. If: a) a driver input of an engine power control parameter (such as throttle setting) exceeds an activation threshold of the SLS so that the SLS is therefore limiting vehicle speed to a set-speed corresponding to the activation threshold; and b) the driver input of the power control parameter is below a SLS override threshold; and c) the SLS override threshold exceeds an auto-braking override threshold for the power control parameter; then the auto-braking override threshold is increased to at least equal the SLS override threshold. The speed limiter activation threshold may be determined from speed limit information supplied by a vehicle navigation system of by an image evaluating unit from images obtained by a camera of the vehicle.

EP-A-2241498 discloses a vehicle with an accelerator grip, a biasing unit connected to the accelerator grip, the biasing unit biasing the accelerator grip to rotate in one circumferential direction, and a restricting unit restricting rotation of the accelerator grip against the biasing unit for placing the accelerator grip to a predetermined opening degree, wherein the restricting unit releases restriction of the accelerator grip when a predetermined operational force or more in one circumferential direction is applied to the accelerator grip so as to excessively rotate the accelerator grip in one circumferential direction beyond the predetermined opening degree.

DE-A-102014017522 discloses a method for operating a driver assistance system of a motor vehicle, by means of which a speed of the motor vehicle can be controlled, with a detection of a permissible maximum speed for a given location by a detection device of the driver assistance system, an automatic setting of the determined maximum speed corresponding maximum value in the driver assistance system and with a cancellation of the setting, if within a predetermined time interval after setting or while the motor vehicle is in a predetermined environment of the predetermined location, a predetermined operating action of a driver of the motor vehicle takes place in order to avoid an erroneous regulatory intervention of a driver assistance system of a motor vehicle.

US-A-2007/293103 discloses an operating state determining device for determining whether or not an engine is in a certain operating state. A mode setting device can disable mode setting into a speed setting mode if a certain operating state of the engine has been determined, and can enable mode setting into the speed setting mode if the engine is not in the operating state.

It is therefore an object of the present invention to provide a motorcycle configured such that an operation of releasing speed limit control is easy and a riding feeling is less likely to be reduced in releasing the speed limit control.

SOLUTION TO THE PROBLEM

A motorcycle disclosed herein includes a driving source configured to output a torque that drives a drive wheel, an accelerator grip that is operated by a rider and is rotatable at least between a first rotation position and a second rotation position in an opening direction that is a rotation direction from the first rotation position to the second rotation position and in a closing direction that is a rotation direction from the second rotation position to the first rotation position, an energizing member configured to energize the accelerator grip toward the first rotation position, an accelerator detector configured to detect a rotation position of the accelerator grip, a vehicle speed detector configured to detect vehicle speed, a driving source controller configured to control the driving source, based on the rotation position of the accelerator grip, such that, when the rotation position of the accelerator grip is the first rotation position, the output torque of the driving source is minimum and, when the rotation position of the accelerator grip is the second rotation position, the output torque of the driving source is maximum, a speed limiter configured to limit the output torque of the driving source such that the vehicle speed does not exceed an upper limit, and a speed limiter stopping device configured to turn off the speed limiter, based on the rotation position of the accelerator grip.

According to the motorcycle, the speed limiter stopping device turns off the speed limiter, based on the rotation position of the accelerator grip, and therefore, the rider can turn off the speed limiter by operating the accelerator grip. Therefore, speed limit control can be easily released. The rider can continue operating the accelerator grip before and after releasing the speed limit control. Therefore, in releasing the speed limit control, a riding feeling is less likely to be deteriorated.

According to the invention, the accelerator grip is configured to be rotatable farther in the closing direction than the first rotation position. The speed limiter stopping device is configured to turn off the speed limiter when the rotation position of the accelerator grip becomes a predetermined rotation position located farther in the closing direction than the first rotation position.

For example, the rider wants to release the speed limit control while the motorcycle decelerates in some cases. According to an aspect, the rider can reduce the vehicle speed by rotating the accelerator grip in the closing direction, and furthermore, according to the invention, the rider can release the speed limit control by rotating the accelerator grip farther in the closing direction than the first rotation position. By the continuous operation of the acceleration grip in the closing direction, deceleration and releasing of the speed limit control can be easily and smoothly performed without deteriorating the riding feeling.

According to one preferred aspect, the speed limiter stopping device is configured to turn off the speed limiter when the rotation position of the accelerator grip becomes the second rotation position.

For example, when the rider wants to pass a preceding vehicle, the rider wants to accelerate the motorcycle and also release the speed limit control in some cases. According to the aspect, the rider can increase the vehicle speed by rotating the accelerator grip in the opening direction, and furthermore, can release the speed limit control by rotating the acceleration grip to the second rotation position. By the continuous operation of the acceleration grip in the opening direction, acceleration and releasing of the speed limit control can be easily and smoothly performed without deteriorating the riding feeling.

According to one preferred aspect, the accelerator grip is configured to be rotatable farther in the opening direction than the second rotation position. The speed limiter stopping device is configured to turn off the speed limiter when the rotation position of the accelerator grip becomes a predetermined rotation position located farther in the opening direction than the second rotation position.

According to the aspect, the rider can increase the vehicle speed by rotating the accelerator grip in the opening direction, and furthermore, can release the speed limit control by rotating the acceleration grip farther in the opening direction than the second rotation position. By the continuous operation of the acceleration grip in the opening direction, acceleration and releasing of the speed limit control can be easily and smoothly performed without deteriorating the riding feeling.

According to one preferred aspect, the speed limiter stopping device is configured to turn off the speed limiter when a change amount of the rotation position of the accelerator grip per unit time becomes a preset threshold or more.

According to the aspect, the rider can release the speed limit control by quickly rotating the accelerator grip in the opening direction. Even when an operation amount of the accelerator grip is not large, the speed limit control can be released. Thus, releasing of the speed limit control can be easily and smoothly performed without deteriorating the riding feeling.

According to one preferred aspect, the speed limiter stopping device is configured to turn off the speed limiter when the rotation position of the accelerator grip changes in the opening direction by a preset change amount or more and then changes in the closing direction by a preset change amount or more within a preset specified time.

According to the aspect, by quickly performing an operation of rotating the accelerator grip in the opening direction and an operation of rotating the acceleration grip in the closing direction in a continuous manner, the rider can release the speed limit control even when the operation amount of the acceleration grip in the opening direction and the operation amount of the acceleration grip in the closing direction are not large. Moreover, the speed limit control can be released substantially without changing the vehicle speed. Thus, releasing of the speed limit control can be easily and smoothly performed without deteriorating the riding feeling.

According to one preferred aspect, the motorcycle further includes an indicator including a first display area configured to display the vehicle speed and a second display area configured to display other information, and a display switching device configured to cause the second display area to display the other information when the speed limiter is off and, cause the second display area to display, instead of the other information, that the speed limiter has been turned on when the speed limiter is on.

According to the aspect, using the second display area that displays the other information, it can be displayed that the speed limiter has been turned on. In the indicator, a dedicated display area that displays that the speed limiter has been turned on is not needed. Therefore, the indicator can be reduced in size.

According to one preferred aspect, the indicator includes a display area configured to display alternative information of the other information.

According to the aspect, even when, in the second display area, instead of the other information, it is displayed that the speed limiter has been turned on, the alternative information of the other information is displayed in the display area. Therefore, while the speed limiter is on, the rider can know at least the alternative information.

According to one preferred aspect, the motorcycle further includes a cruise controller configured to control the driving source such that the vehicle speed is constant set vehicle speed, a selection switch configured to select a normal operation, a cruise control operation, or a speed limit operation, and a set switch configured to turn on the cruise controller when being operated while the cruise control operation is selected and turn on the speed limiter when being operated while the speed limit operation is selected.

According to the aspect, the selection switch is used as a switch used for selecting the cruise control operation and a switch used for selecting the speed limit operation. The set switch is used as a switch used for turning on the cruise controller and a switch used for turning on the speed limiter. The same selection switch and the same set switch can be used for the cruise controller and the speed limiter, and therefore, the number of switches can be reduced.

According to one preferred aspect, the motorcycle further includes a handle bar extending to left and right, a left grip provided in a left end portion of the handle bar, and a switch box arranged rightward of the left grip and leftward of a vehicle center line in the handle bar. The accelerator grip is provided in a right end portion of the handle bar, and the selection switch and the set switch are provided in the switch box.

According to the aspect, the rider can turn on the cruise controller or the speed limiter by operating the selection switch and the set switch with his/her left hand and can turn off the speed limiter by operating the accelerator grip with his/her right hand.

According to one preferred aspect, the motorcycle further includes a torque change reducer configured to reduce a change of the output torque of the driving source when the speed limiter is turned off during traveling. The speed limiter includes a memory that stores the upper limit, a deviation calculator configured to calculate a deviation from the upper limit of the vehicle speed detected by the vehicle speed detector, and a limit torque calculator configured to calculate a limit torque, based on the deviation. The torque change reducer includes a limit value setter configured to set a limit value of a change amount of the limit torque in accordance with a vehicle state and a limit torque adjuster configured to receive the limit torque from the limit torque calculator and adjust the limit torque such that the change amount of the limit torque does not exceed the limit value. The driving source controller includes a rider request torque calculator configured to calculate a rider request torque, based on the rotation position of the accelerator grip, and a target torque calculator configured to receive an adjusted limit torque from the limit torque adjuster and calculate the target torque, based on the adjusted limit torque and the rider request torque.

According to the aspect, if the speed limiter is turned off during traveling, the change amount of the limit torque is limited in accordance with a vehicle state. Thus, a rapid change of the target torque is reduced, and accordingly, a change of the output torque of the driving source is reduced. When the speed limiter is turned off, a rapid change of the output torque of the driving source can be suppressed, and therefore, a riding feeling can be improved.

According to one preferred aspect, the target torque calculator is configured to, if the speed limiter is turned off during traveling, set the adjusted limit torque to the target torque when the adjusted limit torque is smaller than the rider request torque and set the rider request torque to the target torque when the adjusted limit torque is equal to or more than the rider request torque.

According to the aspect, an excessive increase of the output torque of the driving source is reduced during acceleration. Therefore, the riding feeling during acceleration can be improved.

According to one preferred aspect, the motorcycle further includes a transmission including a driving member connected to the driving source and a driven member connected to the drive wheel and configured to change a deceleration rate between the driving member and the driven member, and a deceleration rate detector configured to detect a deceleration rate of the transmission. The limit value setter is configured to set the limit value in accordance with the deceleration rate of the transmission.

According to the aspect, when the speed limiter is turned off during traveling, rapid acceleration can be avoided in accordance with the deceleration rate, so that the riding feeling can be improved.

The limit value setter may be configured to set a first limit value as the limit value if the deceleration rate of the transmission is a first deceleration rate, and set a second limit value that is smaller than the first limit value as the limit value if the deceleration rate of the transmission is a second deceleration rate that is higher than the first deceleration rate.

According to the aspect, if the speed limiter is turned off in turning left or right, rapid acceleration can be avoided in accordance with a degree of a lean of the vehicle body, so that the riding feeling can be improved.

According to one preferred aspect, the motorcycle further includes a lean state detector configured to detect a lean parameter related to a lean state of the vehicle body. The limit value setter is configured to set the limit value in accordance with a value of the lean parameter.

According to the aspect, if the speed limiter is turned off while traveling, rapid acceleration can be avoided in accordance with a bank angle or an angular velocity of the bank angle, so that the riding feeling can be improved.

The lean parameter may be a bank angle of the vehicle body or an angular velocity of the bank angle. The limit value setter may be configured to set a third limit value as the limit value if the value of the lean parameter is a first value, and set a fourth limit value that is smaller than the third limit value as the limit value if the value of the lean parameter is a second value that is larger than the first value.

ADVANTAGES OF THE INVENTION

According to the present invention, a motorcycle configured such that an operation of releasing speed limit control is easy and a riding feeling is less likely to be deteriorated in releasing the speed limit control can be provided.

BRIEF DESCRIPTION OF THE DRAWINGS

FIG. 1 is a side view of a motorcycle according to an embodiment.
FIG. 2 is a cross-sectional view of an internal combustion engine.
FIG. 3 is a plan view of a handle.
FIG. 4 is a view illustrating a display image during a normal operation.
FIG. 5 is a view illustrating a display image when a cruise control operation is selected.
FIG. 6 is a view illustrating a display image when a speed limit operation is selected.
FIG. 7 is a view illustrating a display image when the cruise control operation is set.
FIG. 8 is a view illustrating a display image when the speed limit operation is set.
FIG. 9 is a block diagram illustrating sensors, switches, an ECU, and target devices to be controlled.
FIG. 10 is a functional block diagram of a control system according to a first embodiment.
FIG. 11 is a graph illustrating a first determination condition, illustrating a relationship between a rotation position of an accelerator grip and an output voltage of an accelerator sensor.
FIG. 12 is a graph illustrating a second determination condition, illustrating a relationship between the rotation position of the accelerator grip and the output voltage of the accelerator sensor.
FIG. 13 is a graph illustrating a third determination condition, illustrating a relationship between the rotation position of the accelerator grip and the output voltage of the accelerator sensor.
FIG. 14 is a graph illustrating a fourth determination condition, illustrating a change of a change amount of the rotation position of the accelerator grip per unit time with time.
FIG. 15 is a graph illustrating a fifth determination condition, illustrating a change of the rotation position of the accelerator grip per unit time with time.
FIG. 16 is a functional block diagram of a control system according to a second embodiment.
FIG. 17 is a graph illustrating an example of a change of vehicle speed with time.
FIG. 18 is a graph illustrating an example of a change of an output torque.
FIG. 19 is a graph illustrating an example of a change of the output torque for each deceleration rate.
FIG. 20 is a graph illustrating an example of a change of the output torque for each bank angle.

DESCRIPTION OF EMBODIMENTS

(First Embodiment)

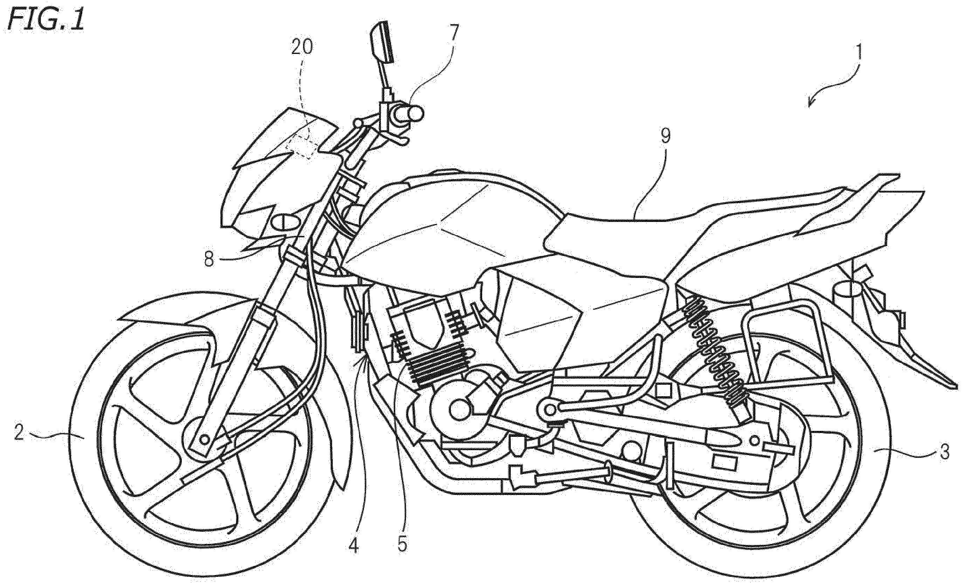

With reference to the attached drawings, embodiments will be described below. FIG. 1 is a side view of a motorcycle 1 according to an embodiment. The motorcycle 1 includes a front wheel 2, a rear wheel 3, a vehicle body 4 supported by the front wheel 2 and the rear wheel 3, and an internal combustion engine (which will be hereinafter referred to as an engine) 5 supported by the vehicle body 4. The engine 5 is an example of a "driving source" that outputs a torque that drives the rear wheel 3. The vehicle body 4 includes a handle bar 7, a steering shaft 8 with the handle bar 7 attached thereto, a seat 9 on which a rider sits, and an indicator 20 that displays vehicle speed or the like.

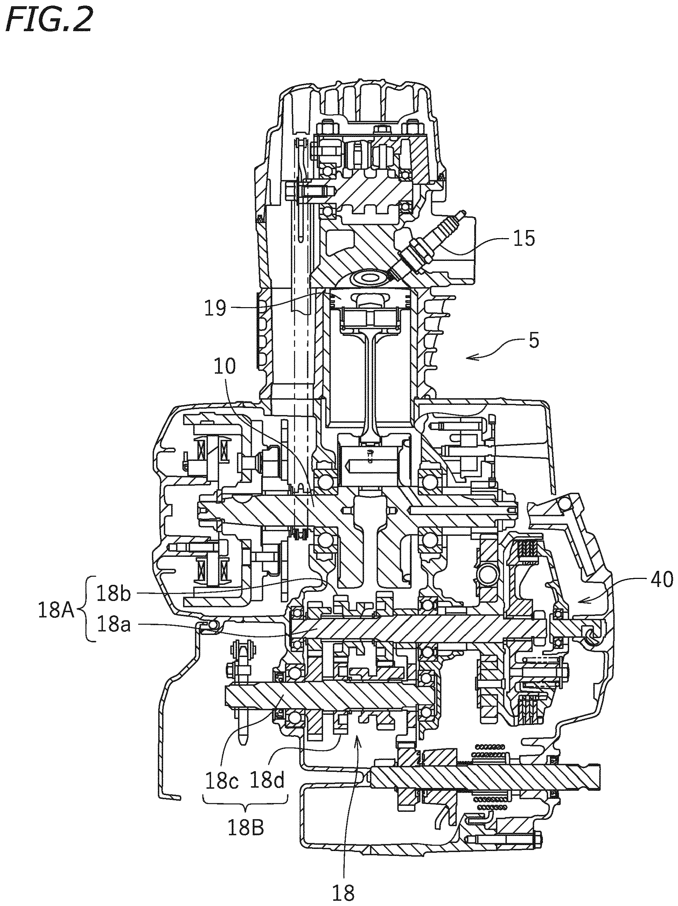

As illustrated in FIG. 2, the engine 5 includes a piston 19 and a crank shaft 10 connected to the piston 19. A clutch 40 is coupled to the crank shaft 10. A transmission 18 is coupled to the clutch 40.

The transmission 18 includes a driving member 18A coupled to the engine 5 and a driven member 18B connected to the rear wheel 3. In this embodiment, the transmission 18 is a multistep transmission. The driving member 18A includes a driving shaft 18a and a plurality of driving gears 18b. The driven member 18B includes a driven shaft 18c and a plurality of driven gears 18d. In the transmission 18, a torque is transmitted from the driving member 18A to the driven member 18B. The transmission 18 is configured to change a deceleration rate. The deceleration rate herein is a ratio of rotation speed of the driving member 18A to rotation speed of the driven member 18B. That is, the deceleration rate = (the rotation speed of the driving member 18A)/(the rotation speed of the driven member 18B). The driven member 18B of the transmission 18 and the rear wheel 3 are connected to each other via a power transmission member, such as a chain or the like. Note that there is no particular limitation on the number of shift steps of the transmission 18 but the number of shift steps is, for example, six. The transmission 18 is not limited to a multistep transmission and may be a continuously variable transmission, such as a CVT or the like.

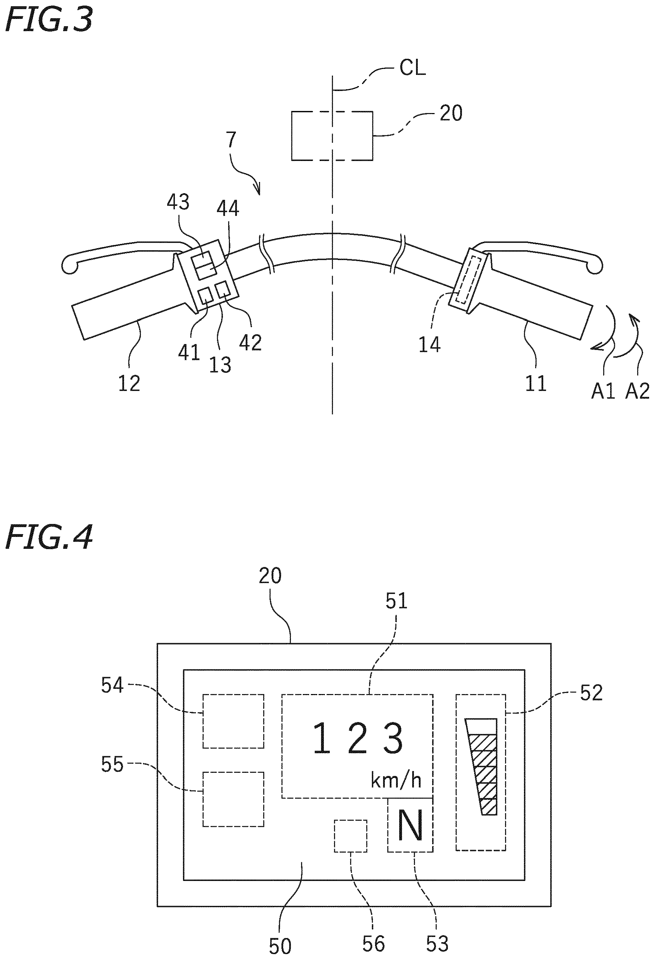

As illustrated in FIG. 3, a rotatable accelerator grip 11 is provided in a right end portion of the handle bar 7. The accelerator grip 11 is rotatable in an opening direction A1 and a closing direction A2. Herein, the opening direction A1 is a counterclockwise direction when viewed from a right side. The closing direction A2 is a direction opposite to the opening direction A1, that is, a clockwise direction when viewed from a right side. The accelerator grip 11 is rotatable at least between a first rotation position and a second rotation position. The first rotation position is a so-called full close position. When a rotation position of the accelerator grip 11 (which will be hereinafter simply referred to as an accelerator position) is the first rotation position, an output torque of the engine 5 is minimum. The second rotation position is a so-called full open position. When the accelerator position is the second rotation position, the output torque of the engine 5 is maximum. A return spring 14 that energizes the accelerator position toward the first rotation position is provided in the accelerator grip 11. The return spring 14 is an example of an "energizing member". When the rider releases his or her hand from the accelerator grip 11, the accelerator grip 11 automatically returns to the first rotation position.

A nonrotatable fixed grip 12 and a switch box 13 are provided in a left end portion of the handle bar 7. The switch box 13 is arranged rightward of the fixed grip 12 and leftward of a vehicle center line CL. In the switch box 13, a selection switch 41, a set switch 42, an up switch 43, and a down switch 44 are provided. There is no particular limitation on forms of the switches 41 to 44, but the switches 41 to 44 are constituted by button type switches herein. Switches provided in the switch box 13 are not limited to the switches 41 to 44. Some other switch may be provided in the switch box 13.

In the motorcycle 1 according to this embodiment, a normal operation, a cruise control operation in which the motorcycle 1 travels at constant speed regardless of an operation of the accelerator grip 11, and a speed limit operation in which vehicle speed is limited such that the vehicle speed does not exceed an upper limit are possible. The selection switch 41 is a switch used for selecting a type of operation. Herein, each time the selection switch 41 is pressed, the normal operation, the cruise control operation, and the speed limit operation are selected in order. The set switch 42 is a switch used for switching on and off of the cruise control operation or the speed limit operation. The up switch 43 and the down switch 44 are used, for example, for setting or changing an upper limit of vehicle speed of the limit operation (which will be hereinafter referred to as an upper limit vehicle speed). When the rider operates the up switch 43, the upper limit vehicle speed is increased and, when the rider operates the down switch 44, the upper limit vehicle speed is reduced.

As illustrated in FIG. 4, the indicator 20 includes a display screen 50 that displays information. The display screen 50 includes first to sixth display areas 51 to 56. The vehicle speed is displayed in the first display area 51. A fuel remaining amount can be displayed in the second display area 52. A gear position can be displayed in the third display areas 53. A character, a symbol, or the like (which will be hereinafter referred to as an empty mark) that indicates that the fuel remaining amount is a predetermined amount or less is displayed in the sixth display area 56.

As described above, each time the selection switch 41 is pressed, the normal operation, the cruise control operation, and the speed limit operation are selected in order. FIG. 4, FIG. 5, and FIG. 6 illustrate a display when the normal operation is selected, a display when the cruise control operation is selected, and a display when the speed limit operation is selected, respectively.

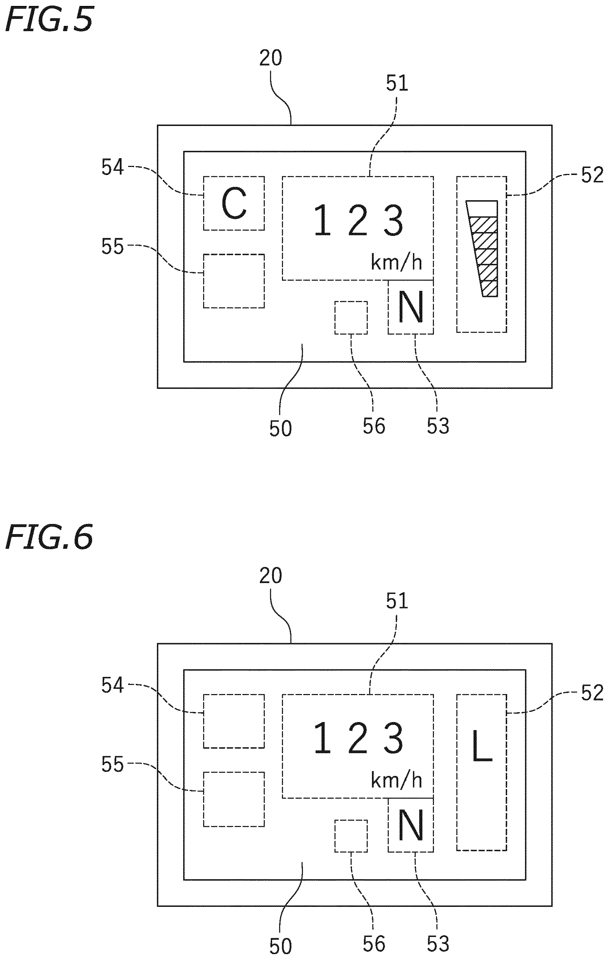

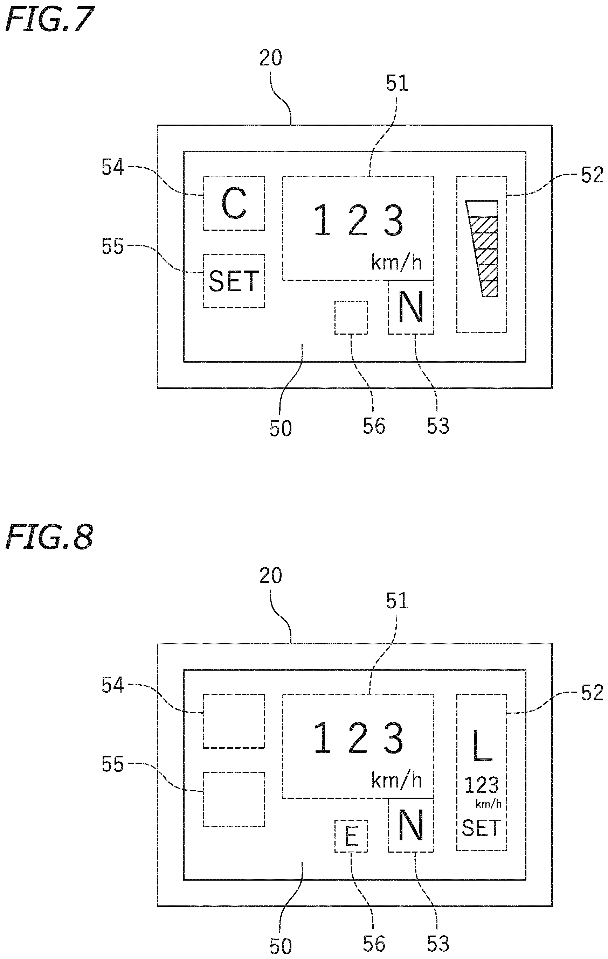

As illustrated in FIG. 5, a character, a symbol, or the like that indicates that the cruise control operation has been selected is displayed in the fourth display are 54. FIG. 7 illustrates a display when the cruise control operation is turned on. When the set switch 42 is pressed in a state where the cruise control operation has been selected as illustrated in FIG. 5, as illustrated in FIG. 7, a character, a symbol, or the like that indicates that the cruise control operation is being executed is displayed in the fifth display area 55. When the set switch 42 is pressed during execution of the cruise control operation, a display of the fifth display area 55 is cleared (see FIG. 5).

As illustrated in FIG. 6, when the speed limit operation is selected, instead of the fuel remaining amount, a character, a symbol, or the like that indicates that the speed limit operation has been selected is displayed in the second display area 52. When the set switch 42 is pressed in a state where the speed limit operation is selected, as illustrated in FIG. 8, a character or a symbol that indicates that the speed limit operation is being executed and the upper limit vehicle speed are further displayed in the second display area 52. When the speed limit operation is released, a display of the second display area 52 is switched from a display of the character or the like that indicates that the speed limit operation is being executed and the upper limit vehicle speed to a display of the fuel remaining amount. That is, a display of the indicator 20 is switched from a display illustrated in FIG. 8 to a display illustrated in FIG. 6.

As illustrated in FIG. 8, when the fuel remaining amount is a predetermined amount or less, the empty mark is displayed in the sixth display area 56. Information represented by the empty mark indicates whether the fuel remaining amount is the predetermined amount or less, that is, alternative information of the information that is the fuel remaining amount. That is, when it is assumed that the fuel remaining amount displayed in the second display area 52 is "the other information," information displayed in the sixth display area 56 is "alternative information" of "the other information." The alternative information is information including a part or a whole of information included in the other information. If the speed limit operation is being executed, in the second display area 52, instead of the fuel remaining amount, it is displayed that the speed limit operation is being executed or the like. However, when the fuel remaining amount is the predetermined amount or less, the empty mark is displayed in the sixth display area 56. Therefore, even when the fuel remaining amount is not displayed in the second display area 52, the rider can easily know that the fuel remaining amount is the predetermined amount or less.

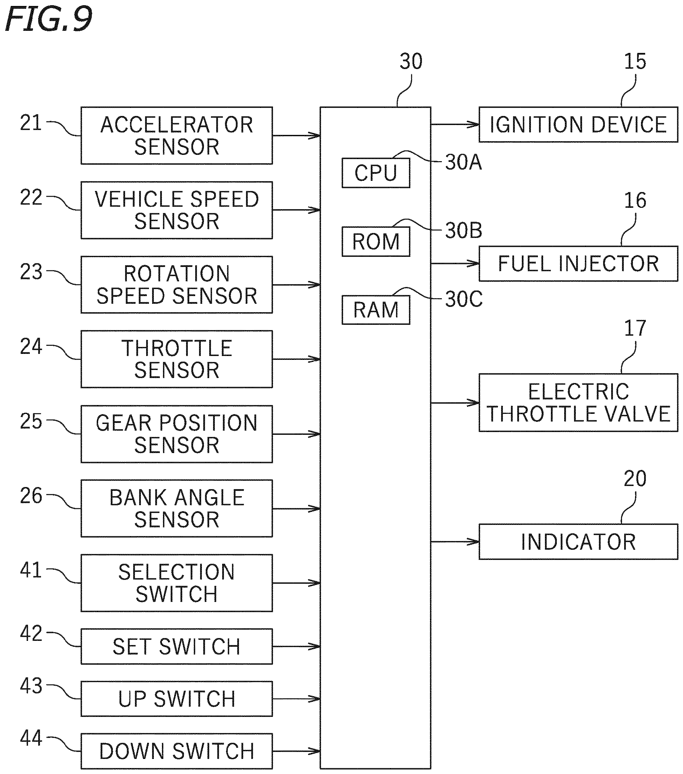

As illustrated in FIG. 9, the engine 5 includes an ignition device 15, a fuel injector 16, and an electric throttle valve 17. The ignition device 15, the fuel injector 16, and the electric throttle valve 17 are operated, so that a torque output by the engine 5 (which will be hereinafter referred to as an output torque) is controlled.

The motorcycle 1 includes an accelerator sensor 21 that detects an operation amount of the accelerator grip 11, a vehicle speed sensor 22 that detects vehicle speed, a rotation speed sensor 23 that detects rotation speed of the engine 5, a throttle sensor 24 that detects an opening of the electric throttle valve 17 (which will be hereinafter referred to as a throttle opening), a gear position sensor 25 that detects a gear position of the transmission 18, and a bank angle sensor 26 that detects a bank angle. In this embodiment, the operation amount of the accelerator grip 11 means a rotation position of the accelerator grip 11 from the first rotation position. Herein, a rotation position from the first rotation position in the opening direction A1 is a positive rotation position, and a rotation position from the first rotation position in the closing direction A2 is a negative rotation position. As the rotation position (in other words, a rotation angle) of the accelerator grip 11 increases, the operation amount of the accelerator grip 11 increases. The rotation speed of the engine 5 is rotation speed of the crank shaft 10. The accelerator sensor 21, the vehicle speed sensor 22, the gear position sensor 25, and the bank angle sensor 26 are examples of "an accelerator detector," "a vehicle speed detector," "a deceleration rate detector," and "a lean state detector," respectively.

The motorcycle 1 includes an electronic control unit (ECU) 30 as a control unit that performs various controls. The ECU 30 includes a CPU 30A, a ROM 30B, a RAM 30C, or the like. The ECU 30 is communicably coupled to the accelerator sensor 21, the vehicle speed sensor 22, the rotation speed sensor 23, the throttle sensor 24, the gear position sensor 25, and the bank angle sensor 26 and is configured to receive signals from the sensors. The ECU 30 is also communicably coupled to the selection switch 41, the set switch 42, the up switch 43, and the down switch 44 and is configured to receive signals from the switches. The ECU 30 is communicably coupled to the ignition device 15, the fuel injector 16, and the electric throttle valve 17 and is configured to transmit signals to these components. By controlling the ignition device 15, the fuel injector 16, and the electric throttle valve 17, the ECU 30 controls the output torque of the engine 5. The ECU 30 is communicably coupled to the indicator 20 and is configured to transmit a signal to the indicator 20.

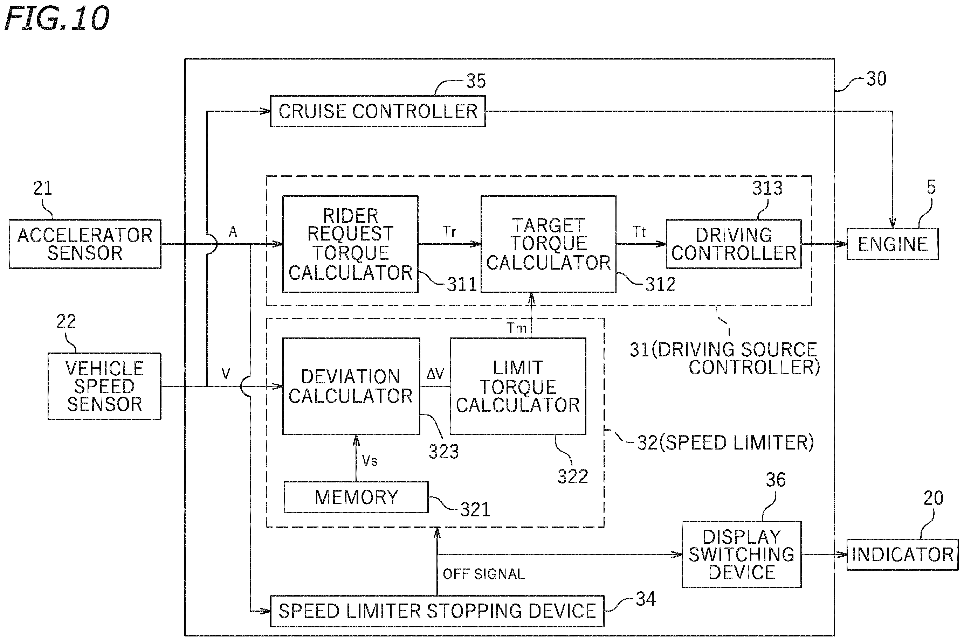

FIG. 10 is a functional block diagram of the ECU 30. The ECU 30 executes a computer program stored in the ROM 30B or the like to function as a driving source controller 31, a speed limiter 32, a speed limiter stopping device 34, a display switching device 36, and a cruise controller 35. In accordance with an operation of the accelerator grip 11 by the rider, the driving source controller 31 controls the engine 5 such that the output torque of the engine 5 becomes a target torque Tt. The speed limiter 32 limits the output torque of the engine 5 such that the vehicle speed does not exceed an upper limit vehicle speed Vs. The speed limiter stopping device 34 turns off the speed limiter 32, based on the operation of the accelerator grip 11 by the rider. The display switching device 36 receives signals from the switches 41 to 44 and the speed limiter stopping device 34 and switches the display of the indicator 20. The cruise controller 35 controls the output torque of the engine 5 such that the vehicle speed is constant set vehicle speed.

The speed limiter 32 includes a memory 321 that stores the upper limit vehicle speed Vs, a deviation calculator 323 that calculates a deviation $\Delta V = Vs - V$ from the upper limit vehicle speed Vs of the vehicle speed V, and a limit torque calculator 322 that calculates a limit torque Tm, at least based on the deviation $\Delta V$. The memory 321 is configured such that the upper limit vehicle speed Vs is rewritable therein. When the rider operates the up switch 43 or the down switch 44 to change the upper limit vehicle speed Vs, the memory 321 stores the changed upper limit vehicle speed Vs. There is no particular limitation on a method for calculating the limit torque Tm in the limit torque calculator 322. Herein, the limit torque Tm is calculated as the limit torque Tm = a predetermined feedback gain $\times$ the deviation $\Delta V$ + a predetermined travel resistance feedforward torque. Note that the limit torque Tm is a parameter that changes with a lapse of time.

The driving source controller 31 includes a rider request torque calculator 311 that calculates a rider request torque Tr, based on the operation amount A of the accelerator grip 11 (which will be hereinafter referred to as an accelerator operation amount), a target torque calculator 312 that calculates the target torque Tt, and a driving controller 313 that controls the engine 5 such that the output torque of the engine 5 becomes the target torque Tt. The rider request torque Tr is input to the target torque calculator 312 from the rider request torque calculator 311 and the limit torque Tm is input to the target torque calculator 312 from the limit torque calculator 322. The target torque calculator 312 sets the limit torque Tm to the target torque Tt if it is needed to impose a limit on the rider request torque Tr and sets the rider request torque Tr to the target torque Tt if it is not needed to impose a limit on the rider request torque Tr. That is, the target torque calculator 312 sets the rider request torque Tr to the target torque Tt if the limit torque Tm is larger than the rider request torque Tr, and sets the limit torque Tm to the target torque Tt if the limit torque Tm is equal to or less than the rider request torque Tr. The target torque Tt calculated in the above-described manner is input to the driving controller 313. The driving controller 313 controls the engine 5 such that the engine output torque becomes the target torque Tt.

In the motorcycle 1 according to the invention, the rider can turn off the speed limiter 32 by operating the accelerator grip 11. The speed limiter stopping device 34 transmits an off signal to turn off the speed limiter 32, based on the rotation position of the accelerator grip 11. Note that the phrase "based on the rotation position of the accelerator grip 11" encompasses both of a case where the off signal is transmitted based on a value of the rotation position of the accelerator grip 11 and a case where the off signal is transmitted based on a change of the value of the rotation position. When a predetermined condition related to the rotation position of the accelerator grip 11 is satisfied, the speed limiter 32 is turned off by the speed limiter stopping device 34. The speed limiter stopping device 34 determines whether the predetermined condition is satisfied and, if the speed limiter stopping device 34 determines that the predetermined condition is satisfied, the speed limiter stopping device 34 transmits the off signal.

By various operations of the accelerator grip 11, the speed limiter 32 can be turned off. As conditions for turning off the speed limiter 32, there are various possible determination conditions. Next, examples of the determination conditions will be described.

(First Determination Condition)

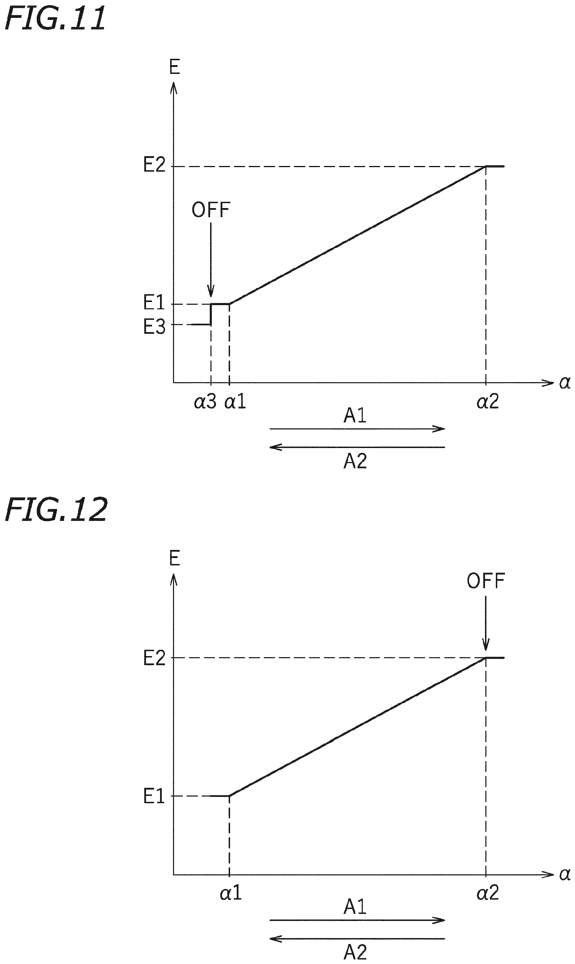

According to the invention, the accelerator grip 11 is rotatable farther in the closing direction than the first rotation position and the speed limiter 32 is configured to be turned off when the acceleration position becomes a predetermined rotation position located farther in the closing direction than the first rotation position. FIG. 11 is a graph illustrating a relationship between an accelerator position a and a voltage E output by the accelerator sensor 21. In FIG. 11, $\alpha 1$ denotes the first rotation position and a2 denotes the second rotation position. When the accelerator position a is between the first rotation position $\alpha 1$ and the second rotation position a2, as the accelerator position a increases, the output voltage E increases. When a = a1, E = E1 and, when $\alpha = \alpha 2$, E = E2. When the accelerator position a becomes a predetermined rotation position o3 located farther in the closing direction A2 than the first rotation position $\alpha 1$ or less, the output voltage E is E3 that is lower than E1. The speed limiter stopping device 34 may be configured to turn off the speed limiter 32 when the output voltage E of the accelerator sensor 21 becomes E3.

For example, there are cases where the rider wants to end the speed limit operation and return to the normal operation while the rider is decelerating the motorcycle 1. For example, in some cases, the rider travels in a designated maximum speed set zone where maximum speed is designated by a road sign or a road mark or a zone where a legal maximum speed is designated. In traveling in such a zone with a vehicle speed limit imposed by the speed limiter 32, while the rider is decelerating before a last red light in the zone, the rider wants to return to the normal operation in some cases. In such a case, the rider can turn off the speed limiter 32 by moving the accelerator grip 11 toward the first rotation position $\alpha 1$ in the closing direction A2 in order to decelerate and then further moving the accelerator grip 11 to the rotation position a3. The rider can turn off the speed limiter 32 only by operating the accelerator grip 11 (which will be hereinafter referred to as an accelerator operation) even without operating the set switch 42 of the switch box 13. The rider also can turn off the speed limiter 32 by the accelerator operation continuous to the accelerator operation performed for deceleration. Thus, a smooth accelerator operation is enabled and the speed limit operation can be released without deteriorating the riding feeling.

As an accelerator operator of a vehicle, an accelerator pedal of an automobile is known. However, the accelerator pedal is different from the accelerator grip 11 of the motorcycle 1 and cannot be moved farther in the closing direction than a position where an output torque of an engine is minimum. Therefore, in the accelerator pedal, the above-described operation is not possible.

(Second Determination Condition)

As illustrated in FIG. 12, when the accelerator position a becomes the second rotation position a2, the speed limiter 32 may be turned off. The speed limiter stopping device 34 may be configured to turn off the speed limiter 32 when the output voltage of the accelerator sensor 21 becomes E2.

For example, there are cases where the rider wants to pass a preceding vehicle during traveling with a vehicle speed limit imposed by the speed limiter 32. However, with the vehicle speed limit kept imposed, the vehicle speed does not exceed the upper limit vehicle speed even at acceleration, and therefore, the rider cannot pass the preceding vehicle in some cases. According to a second determination condition, the rider can accelerate the motorcycle 1 by rotating the accelerator grip 11 in the opening direction A1 and can turn off the speed limiter 32 by continuously rotating the accelerator grip 11 to the second rotation position a2. Thus, the vehicle speed can be increased to higher speed than the upper limit vehicle speed, so that the rider can pass the preceding vehicle. The rider can turn off the speed limiter 32 by the accelerator operation continuous to the accelerator operation performed for acceleration. Thus, a smooth accelerator operation is enabled and the speed limit operation can be released without deteriorating the riding feeling.

According to the above-described first determination condition, in order to turn off the speed limiter 32, the rider needs to return the accelerator grip 11 to the rotation position a3 that is smaller than the first rotation position a (see FIG. 11). Therefore, the vehicle speed is temporarily reduced. In order to pass the preceding vehicle, the rider needs to decelerate the motorcycle 1 once, and then, accelerate the motorcycle 1. However, according to the second determination condition, the speed limiter 32 can be turned off without decelerating. Therefore, the rider can pass the preceding vehicle without decelerating once.

Note that the speed limiter stopping device 34 may be configured to turn off the speed limiter 32 immediately after the accelerator position a has become the second rotation position a2 and may be configured to turn off the speed limiter 32 when the accelerator position a has continued to be the second rotation position a2 for a predetermined time. An operation of keeping the accelerator position a to be the second rotation position o2 is not performed without the rider's clear intension. Therefore, the speed limiter 32 can be turned off after the rider's intension is sufficiently confirmed.

(Third Determination Condition)

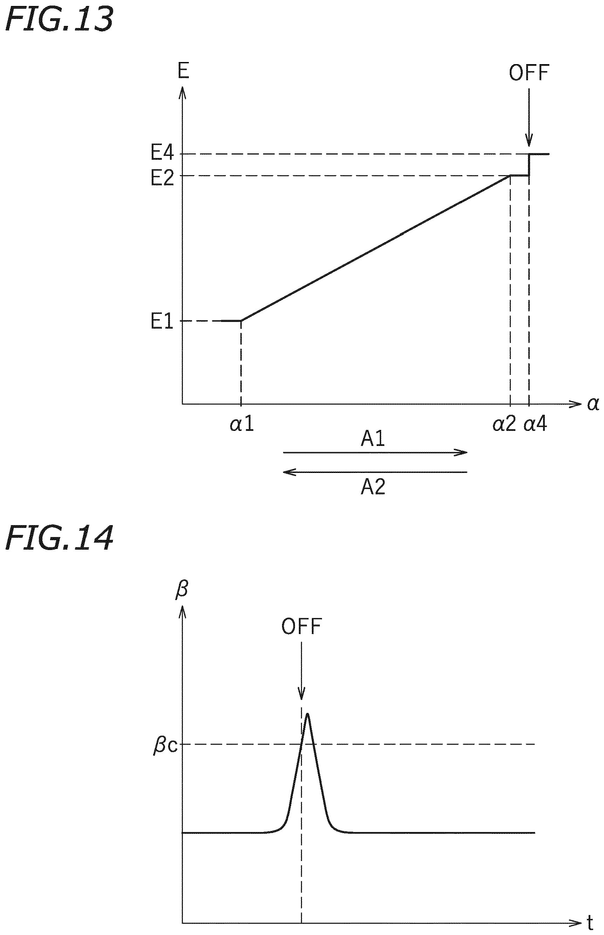

As illustrated in FIG. 13, with the accelerator grip 11 may be configured to be rotatable farther in the opening direction A1 than the second rotation position a2 and the speed limiter 32 may be configured to be turned off when the accelerator position a becomes a predetermined position o4 located farther in the opening direction than the second rotation position o. In this case, when the accelerator position $\alpha$ becomes a4 or more, the output voltage E becomes E4 that is higher than E2. The speed limiter stopping device 34 may be configured to turn off the speed limiter 32 when the output voltage E of the accelerator sensor 21 becomes E4.

According to the third determination condition, the rider can accelerate the motorcycle 1 by rotating the accelerator grip 11 toward the second rotation position a2 in the opening direction A1. The rider can turn off the speed limiter 32 by further rotating the accelerator grip 11 to the rotation position a4. Accordingly, the rider can turn off the speed limiter 32 by the accelerator operation continuous to the accelerator operation performed for acceleration. The speed limiter 32 can be turned off by the smooth accelerator operation. Moreover, when passing a preceding vehicle, there is no need to decelerate the motorcycle 1 once. Thus, the speed limit operation can be released without deteriorating the riding feeling. For example, the rider can smoothly pass the preceding vehicle.

According to the third determination condition, even when the accelerator position a becomes the second rotation position a2, the speed limiter 32 is not turned off, and it is not until the accelerator position a becomes the rotation position a4 that the speed limiter 32 is turned off. Therefore, the speed limiter 32 can be turned off after the rider's intention has been sufficiently confirmed.

A resistance force that increases in a stepwise manner may be caused to act on the accelerator grip 11 when the accelerator grip 11 is rotated from the second rotation position a2 to the rotation position a4. A mechanism that applies such a resistance force may be provided in the accelerator grip 11. Thus, the rider can move the accelerator grip 11 to the rotation position a4 by rotating the accelerator grip 11 toward the second rotation position a2 and discontinuously increasing a force applied to the accelerator grip 11 after the accelerator grip 11 has reached the second rotation position a2. The rider can easily recognize that the acceleration position a has become the second rotation position a2 before turning off the speed limiter 32. Therefore, the speed limiter 32 can be turned off after the rider's intention has been sufficiently confirmed.

(Fourth Determination Condition)

In FIG. 14, an abscissa indicates a time t and an ordinate indicates a change amount $\beta = \Delta\alpha/\Delta t$ of the accelerator position a per unit time. As illustrated in FIG. 14, the speed limiter 32 may be turned off when $\beta$ becomes a preset threshold $\beta c$ or more. The accelerator position a is specified by the output voltage of the accelerator sensor 21. The speed limiter stopping device 34 may be configured to turn off the speed limiter 32 when a change amount of the output voltage of the accelerator sensor 21 per unit time becomes a preset threshold or more.

For example, there are cases where the rider wants to end the speed limit operation and return to the normal operation while the accelerator position a is located in an intermediate position between the first rotation position $\alpha 1$ and the second rotation position a2. In such a case, when the rider tries to turn off the speed limiter 32 according to the first determination condition, the rider needs to change the accelerator position a to the first rotation position $\alpha 1$ and then further change the accelerator position a to the rotation position a3 that is smaller than the first rotation position $\alpha 1$. Therefore, a large acceleration operation amount is needed. When the rider tries to turn off the speed limiter 32 in accordance with the second determination condition or the third determination condition, the rider needs to change the accelerator position a to the second rotation position o2 or to the rotation position a4 that is larger than the second rotation position a2. In this case, a large accelerator operation amount is also needed. Accordingly, it takes a relatively long time to perform the accelerator operation. In order to largely change the accelerator position, the rider needs to re-grip the accelerator grip 11 in some cases.

However, according to the fourth determination condition, the rider can turn off the speed limiter 32 only by quickly changing the accelerator position a. There is no need to largely change the accelerator o. Accordingly, only a short time is required for the accelerator operation. The rider does not need to re-grip the accelerator grip 11. Thus, a smooth accelerator operation is enabled and the speed limit operation can be released without deteriorating the riding feeling.

As described above, as an accelerator operator of a vehicle, an accelerator pedal of an automobile is known. The accelerator pedal is stepped on by a driver's foot and not is rotated by a rider's hand. The driver can largely move the accelerator pedal only by stepping down the accelerator pedal with the foot kept on the accelerator pedal. The driver does not re-step on the accelerator pedal in order to make the accelerator position maximum. On the other hand, in the motorcycle 1, the rider re-grips the accelerator grip 11 in middle of the accelerator operation in some cases. Therefore, the above-described effect that the rider does not need to re-grip the accelerator grip 11 is an effect unique to a motorcycle that cannot be achieved in an automobile.

According to this condition, the speed limiter 32 is turned off when the change amount $\beta$ of the accelerator position a per unit time becomes the threshold $\beta c$ or more such that the rider can turn off the speed limiter 32 by quickly rotating the accelerator grip 11 in the opening direction A1. However, the present invention is not limited thereto. The speed limiter 32 may be configured to be turned off when the change amount of the accelerator position a per unit time is a preset negative threshold or less such that the rider can turn off the speed limiter 32 by quickly rotating the accelerator grip 11 in the closing direction A2. That is, the speed limiter 32 may be configured to be turned off when a reduction amount of the accelerator position $\alpha$ per unit time becomes a predetermined value or more.

(Fifth Determination Condition)

The speed limiter stopping device 34 may be configured to turn off the speed limiter 32 when the accelerator position a changes in the closing direction by a preset change amount or more after changing in the opening direction by a preset change amount or more within a preset specified time.

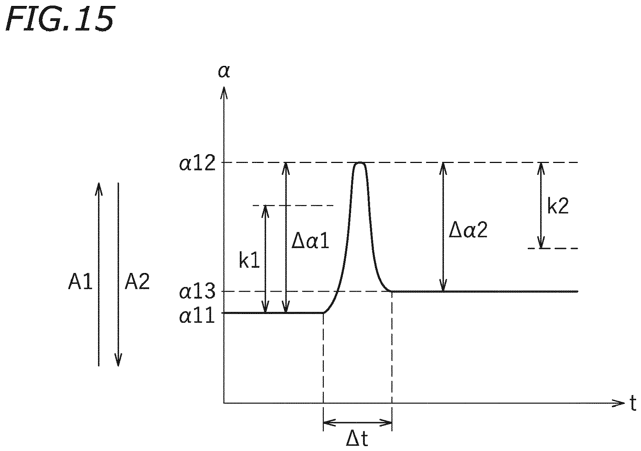

In FIG. 15, an abscissa indicates the time t and an ordinate indicates the acceleration position o. For example, as illustrated in FIG. 15, assume that, during the specified time $\Delta t$, the accelerator position a has changed from $\alpha 11$ to a12 and then a12 to a13. The speed limiter stopping device 34 may be configured to turn off the speed limiter 32 if $\Delta\alpha 1$ = a12 - $\alpha 11$ is a preset change amount k1 or more and $\Delta\alpha 2$ = a12 - a13 is a preset change amount k2 or more. Note that k1 and k2 may be equal to each other and may be different from each other.

According to the fifth determination condition, the rider can turn off the speed limiter 32 by quickly performing an operation of increasing the accelerator position a and then reducing the accelerator position o. Similar to the fourth determination condition, there is no need to largely change the accelerator position a. Therefore, according to the fifth determination condition, only a short time is required for the accelerator operation and the rider does not need to re-grip the accelerator grip 11. The speed limiter 32 can be turned off by a smooth accelerator operation. Thus, the speed limit operation can be released without deteriorating the riding feeling.

Examples of the determination conditions when the speed limiter 32 is turned off have been described above. However, the above-described first to fifth determination conditions are merely examples. Various other determination conditions are possible. As a determination condition when the speed limiter 32 is turned off, only one of the first to fifth determination conditions may be used. For example, if the first determination condition is satisfied, the speed limiter stopping device 34 turns off the speed limiter 32, but the speed limiter stopping device 34 may be configured not to turn off the speed limiter 32 even if an arbitrary one of the second to fifth determination conditions is satisfied. Alternatively, as determination conditions when the speed limiter 32 is turned off, two or more of the first to fifth determination conditions may be used. For example, the speed limiter stopping device 34 may be configured to turn off the speed limiter 32 if an arbitrary one of the first determination condition, the third determination condition, or the fifth determination condition is satisfied.

As described above, according to the motorcycle 1 according to this embodiment, the rider can turn off the speed limiter 32 by operating the accelerator grip 11. In order to turn off the speed limiter 32, the rider does not need to operate the set switch 42 of the switch box 13. Therefore, the rider can easily release the speed limit control. Moreover, the rider can continue the operation of the accelerator grip 11 before and after releasing the speed limit control. Therefore, at a time of releasing the speed limit control, the riding feeling is less likely to be deteriorated.

According to the motorcycle 1, when the speed limiter 32 is off, the fuel remaining amount is displayed in the second display area 52 of the indicator 20 (see FIG. 4 and FIG. 7) and, when the speed limiter 32 is on, it is displayed in the second display area 52 that the speed limiter 32 has been turned on (see FIG. 8). Using the second display area 52 that displays the fuel remaining amount, it is displayed that the speed limiter 32 has been turned on. In the indicator 20, a dedicated display area that displays that the speed limiter 32 has been turned on is not needed. Therefore, the indicator 20 can be reduced in size.

The indicator 20 includes the sixth display area 56 in which it is displayed that the fuel remaining amount is a predetermined amount or less. Even in a case where, instead of the fuel remaining amount, it is displayed that the speed limiter 32 has been turned on in the second display area 52, when the fuel remaining amount becomes the predetermined amount or less, the empty mark is displayed in the sixth display area 65 (see FIG. 8). Therefore, even when the fuel display amount is not displayed in the second display area 52, the rider can easily know that the duel remaining amount has become the predetermined amount or less.

According to the motorcycle 1, the normal operation, the cruise control operation, and the speed limit operation are possible. The motorcycle 1 includes the selection switch 41 and the set switch 42. The selection switch 41 is used as a switch used for selecting the cruise control operation and a switch used for selecting the speed limit operation. The set switch 42 is used as a switch used for turning on the cruise controller 35 and a switch used for turning on the speed limiter. According to the motorcycle 1, the same selection switch 41 and the same set switch 42 can be used for both of the cruise controller 35 and the speed limiter 32, and therefore, the number of switches can be reduced.

According to the motorcycle 1, as illustrated in FIG. 3, the accelerator grip 11 is provided in the right end portion of the handle bar 7 and the selection switch 41 and the set switch 42 are provided in the switch box 13 arranged rightward of a left grip 12 and leftward of the vehicle center line CL. The rider can turn on the cruise controller 35 or the speed limiter 32 by operating the selection switch 41 and the set switch 42 with his or her left hand and can turn off the speed limiter 32 by operating the accelerator grip 11 with his or her right hand.

(Second Embodiment)

The motorcycle 1 has a lighter weight than that of an automobile. Depending on a vehicle state when the speed limiter 32 has been turned off, a degree of acceleration that the rider feels increases in some cases. There is a probability that this causes deterioration of the riding feeling. Thus, a configuration in which, depending on the vehicle state when the speed limiter 32 has been turned off, a rapid change of the output torque of the engine 5 is reduced may be employed. A second embodiment is achieved by providing a torque change reducer that reduces a rapid change of the output torque of the engine 5 when the speed limiter 32 is turned off during traveling of the motorcycle 1 in the first embodiment. In the following description, the same portions as those in the first embodiment are denoted by the same reference numerals and the description thereof will be omitted.

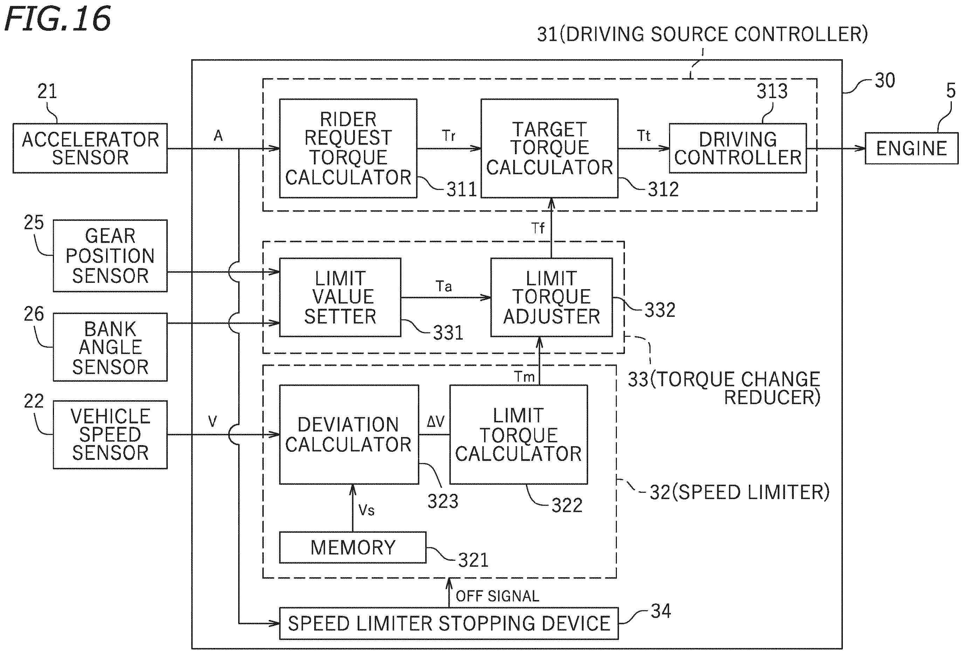

FIG. 16 is a functional block diagram of the ECU 30 according to this embodiment. In FIG. 16, illustration of the cruise controller 35 and the display switching device 36 is omitted. In this embodiment, the ECU 30 also functions as the torque change reducer 33 by executing a predetermined computer program.

The torque change reducer 33 reduces the degree of acceleration when the speed limiter 32 is turned off during traveling of the motorcycle 1. As described above, the limit torque $Tm$ changes with a lapse of time. The torque change reducer 33 limits a change amount of the limit torque $Tm$. The torque change reducer 33 includes a limit value setter 331 and a limit torque adjuster 332. When the speed limiter 32 is turned off during traveling of the motorcycle 1, the limit value setter 331 sets a limit value $Ta$ of the change amount of the limit torque $Tm$ in accordance with the vehicle state. The limit value $Ta$ is set for the change amount of the limit torque $Tm$ such that the limit torque $Tm$ does not excessively increase in a short time.

The limit torque Tm is input to the limit torque adjuster 332 from the limit torque calculator 322, and the limit value Ta is input to the limit torque adjuster 332 from the limit value setter 331. The limit torque adjuster 332 calculates an adjusted limit torque Tf in accordance with procedures described below in every predetermined cycle.

First, the limit torque adjuster 332 calculates a limit torque change amount in accordance with Expression 1 below.

[Expression 1]

$$\text{Change amount of Limit torque} = \text{Limit torque Tm} - \text{Previous calculation value of Adjusted limit torque Tf}$$

Note that there is no previous calculation value of the adjusted limit torque Tf at a start of control. Therefore, a rider request torque Tr is regarded as the previous calculation value of the adjusted limit torque Tf.

Next, the limit torque adjuster 332 determines whether an absolute value of the change amount of the limit torque is larger than the limit value Ta. If the absolute value of the change amount of the limit torque is larger than the limit value Ta, the limit torque adjuster 332 adjusts the limit torque such that the absolute value of the change amount of the limit torque does not exceed the limit value Ta. That is, the limit torque adjuster 332 adjusts the limit torque such that |the change amount of the limit torque| ≤ the limit value Ta.

Lastly, the limit torque adjuster 332 calculates the adjusted limit torque Tf in accordance with Expression 2 described below.

[Expression 2]

$$\text{Adjusted limit torque Tf} = \text{Previous value of Adjusted limit torque Tf} + \text{Change amount of Limit torque}$$

The rider request torque Tr is input to the target torque calculator 312 of the driving source controller 31 from the rider request torque calculator 311 and the adjusted limit torque Tf is input to the target torque calculator 312 from the limit torque adjuster 332. The target torque calculator 312 sets the adjusted limit torque Tf to the target torque Tt if it is needed to impose a limit on the rider request torque Tr and sets the rider request torque Tr to the target torque Tt if it is not needed to impose a limit on the rider request torque Tr. That is, if the speed limiter 32 is turned off during traveling, the target torque calculator 312 sets the adjusted limit torque Tf to the target torque Tt if the adjusted limit torque Tf is smaller than the rider request torque Tr and sets the rider request torque Tr to the target torque Tt if the adjusted limit torque Tf is equal to or more than the rider request torque Tr.

The "vehicle state" can be specified by values of various parameters detected by the various sensors (see the sensors 21 to 26 in FIG. 4) of the motorcycle 1. For example, when a gear position is detected by the gear position sensor 25, a deceleration rate of the transmission 18 is specified. For example, the vehicle state is specified by the deceleration rate of the transmission 18. The vehicle state is specified by the bank angle detected by the bank angle sensor 26. Alternatively, the vehicle state is specified by an angular velocity of the bank angle. Note that the vehicle state may be specified based on a value of a single parameter and may be specified based on values of a plurality of parameters.

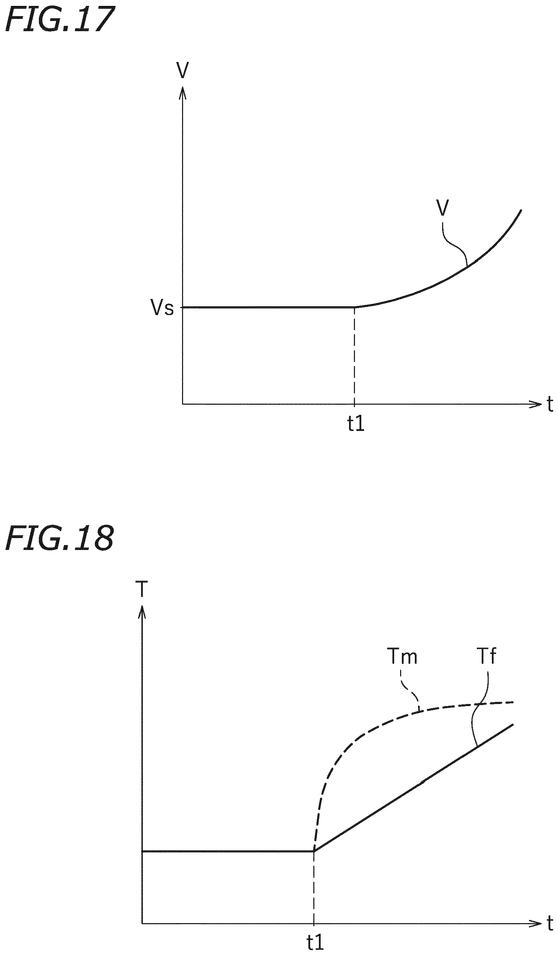

As illustrated in FIG. 17, there are cases where, while the motorcycle 1 travels at the upper limit vehicle speed Vs with a limit imposed on the motorcycle 1 by the speed limiter 32, the speed limiter 32 is turned off at the time t1 and the vehicle speed V is increased. If the limit torque Tm immediately before the speed limiter 32 is turned off is large, without any action taken, the target torque is rapidly increased in some cases and, for example, as indicated by a broken line in FIG. 18, the output torque T of the engine 5 is rapidly increased. Thus, the degree of acceleration of the vehicle body is increased, and there is a probability that the riding feeling is deteriorated.

However, the motorcycle 1 according to this embodiment includes the torque change reducer 33, and therefore, a rapid increase of the target torque can be avoided. Accordingly, for example, as indicated by a solid line in FIG. 18, a rapid change of the output torque T of the engine 5 is be reduced. Thus, the riding feeling is improved.

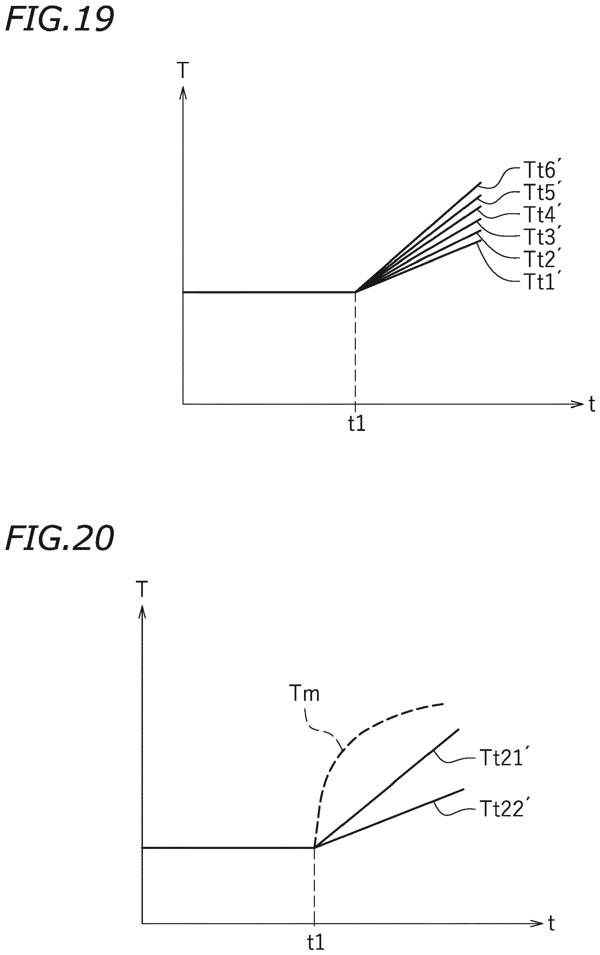

In this embodiment, the degree of reduction is caused to increase as the deceleration rate increases. The limit value Ta of the change amount of the limit torque is set such that, as the deceleration rate increases, the limit value Ta reduces. The deceleration rate reduces in an order of first speed, second speed, third speed, fourth speed, fifth speed, and sixth speed, and therefore, when respective limit values at the first speed to the sixth speed are Ta1 to Ta6, Ta1 < Ta2 < Ta3 < Ta4 < Ta5 < Ta6. When respective target torques Tt' after reduction at the first speed to the sixth speed are Tt1' to Tt6', Tt1' < Tt2' < Tt3' < Tt4' < Tt5' < Tt6'. Thus, as illustrated in FIG. 19, as the deceleration rate increases (in other words, as the gear position reduces), an increase rate of the output torque T reduces. Accordingly, a behavior of the vehicle body is optimized and the riding feeling is improved.

There is no particular limitation on a specific method for setting the limit value Ta and a specific value of the limit value Ta. For example, the limit values Ta2 to Ta6 at the second speed to the sixth speed may be set using the limit value Ta1 at the first speed. For example, using coefficients K2 to K6 each of which is larger than 1 satisfying a relationship of K2 < K3 < K4 < K5 < K6, Ta2 = K2·Ta1, Ta3 = K3·Ta1, Ta4 = K4·Ta1, Ta5 = K5·Ta1, Ta6 = K6·Ta1 may be set to the limit values Ta2 to Ta6 at the second speed to the sixth speed. Alternatively, a map that defines a relationship between the deceleration rate and the limit value Ta may be stored in the ECU 30 in advance and the limit value setter 331 may be configured to read the limit values Ta1 to Ta6 at the first speed to the sixth speed from the map.

Unlike an automobile, in the motorcycle 1, when turning left or right, the rider leans the vehicle body. There are cases where the rider turns off the speed limiter 32 while the vehicle body leans. In this case, without any action taken, the output torque T of the engine 5 is rapidly increased in some cases (see the broken line in FIG. 18). In that case, the degree of acceleration of the vehicle body is increased, and there is a probability that the riding feeling is deteriorated.

However, the motorcycle 1 according to this embodiment includes the torque change reducer 33, and therefore, a rapid change of the output torque T of the engine 5 is reduced. Accordingly, the riding feeling is improved.

The limit value setter 331 sets the limit value Ta such that, as the bank angle increases, the limit value Ta reduces. For example, the limit value setter 331 sets the limit value to Ta21 if the bank angle is a first value and sets the limit value to Ta22 that is smaller than Ta21 if the bank angle is a second value that is larger than the first value. Note that Ta21 and Ta22 are an example of "a third limit value" and an example of "a fourth limit value," respectively. Thus, a change of the output torque T of the engine 5 is more largely reduced as the bank angle increases. In a case where the output torques when the bank angle is the first value and the second value are Tt21' and Tt22; for example, as illustrated in FIG. 20, an increase rate of Tt22' is lower than an increase rate of Tt21'. The limit value Ta can be set, for example, using an operational expression, a map, or the like.

The bank angle is an example of a lean parameter indicating a lean state of the vehicle body. However, the lean parameter is not limited to the bank angle. For example, the lean parameter may be angular velocity of the bank angle. The limit value setter 331 may be configured to set the limit value Ta in accordance with the angular velocity of the bank angle, instead of the bank angle. Also in this case, a rapid change of the output torque T of the engine 5 is reduced, so that the riding feeling is improved.

The limit value setter 331 may be configured to set the limit value Ta, based on only the deceleration rate, and may be configured to set the limit value Ta, based on only the bank angle or only the angular velocity of the bank angle. Alternatively, the limit value setter 331 may be configured to set the limit value Ta, based on the deceleration rate and the bank angle or based on the deceleration rate and the angular velocity of the bank angle.

The limit value setter 331 sets the limit value Ta in accordance with the vehicle state, but a parameter that specifies the vehicle state is not limited to the deceleration rate or the lean parameter related to the lean state of the vehicle body. The number of parameters that specify the vehicle state is not limited to one and may be two or more.

According to this embodiment, when the speed limiter 32 is turned off during traveling, the limit value is set in accordance with the vehicle state and the limit torque is adjusted such that the change amount of the limit torque does not exceed the limit value. Thus, a change of the output torque of the engine 5 is reduced. Therefore, rapid acceleration when the speed limiter 32 is turned off is reduced, so that the riding feeling can be improved.

Embodiments have been described above but the above-described embodiments are merely examples. The present invention can be implemented in various other modes.

The driving source of the motorcycle 1 is not limited to the internal combustion engine 5 and may be an electric motor.

The motorcycle 1 may not be capable of performing cruise control. The motorcycle 1 may be configured to select the normal operation or the speed limit operation.

The switch box 13 may be arranged rightward of the vehicle center line CL.

In the indicator 20, the area in which it is displayed that the speed limiter 32 has been turned on is not limited to the second display area 52 in which the fuel remaining amount is displayed. It may be displayed in some other area that the speed limiter 32 has been turned on. For example, when the speed limiter 32 is turned on, instead of the gear position, it may be displayed in the third display areas 53 that the speed limiter 32 has been turned on. The indicator 20 may include a dedicated display area that displays that the speed limiter 32 has been turned on.

In the above-described embodiments, the fuel remaining amount is an example of "other information" and it is an example of "alternative information" that the fuel remaining amount is the predetermined amount or less. However, there are not particular limitation on "other information" and "alternative information."

DESCRIPTION OF REFERENCE CHARACTERS

1 Motorcycle, 3 Rear wheel (drive wheel), 5 Internal combustion engine (driving source), 7 Handle bar, 11 Accelerator grip, 12 Fixed grip (left grip), 13 Switch box, 14 Return spring (energizing member), 18 Transmission, 18A Driving member, 18B Driven member, 20 Indicator, 21 Accelerator sensor (accelerator detector), 22 Vehicle speed sensor (vehicle speed detector), 25 Gear position sensor (deceleration rate detector), 26 Bank angle sensor (lean state detector), 31 Driving source controller, 32 Speed limiter, 33 Torque change reducer, 34 Speed limiter stopping device, 35 Cruise controller, 36 Display switching device, 41 Selection switch, 42 Set switch, 51 First display area, 52 Second display area, 311 Rider request torque calculator, 312 Target torque calculator, 313 Driving controller, 321 Memory, 322 Target torque calculator, 323 Deviation calculator, 331 Limit value setter, 332 Limit torque adjuster

**Claims**

1.  A motorcycle (1) comprising:

    a driving source (5) configured to output a torque that drives a drive wheel (3);
    an accelerator grip (11) that is operated by a rider and is rotatable at least between a first rotation position ($\alpha$1) and a second rotation position ($\alpha$2) in an opening direction (A1) that is a rotation direction from the first rotation position ($\alpha$1) to the second rotation position ($\alpha$2) and in a closing direction (A2) that is a rotation direction from the second rotation position ($\alpha$2) to the first rotation position ($\alpha$1);
    an energizing member (14) configured to energize the accelerator grip (11) toward the first rotation position ($\alpha$1);
    an accelerator detector (21) configured to detect a rotation position of the accelerator grip (11);
    a vehicle speed detector (22) configured to detect vehicle speed;
    a driving source controller (31) configured to control the driving source (5), based on the rotation position of the accelerator grip (11), such that, when the rotation position of the accelerator grip (11) is the first rotation position ($\alpha$1), the output torque of the driving source (5) is minimum and, when the rotation position of the accelerator grip (11) is the second rotation position (a2), the output torque of the driving source (5) is maximum; and
    a speed limiter (32) configured to limit the output torque of the driving source (5) such that the vehicle speed does not exceed an upper limit; and
    a speed limiter stopping device (34) configured to turn off the speed limiter (32), based on the rotation position of the accelerator grip (11);
    **characterized in that** the accelerator grip (11) is configured to be rotatable farther in the closing direction (A2) than the first rotation position ($\alpha$1), and
    the speed limiter stopping device (34) is configured to turn off the speed limiter (32) when the rotation position of the accelerator grip (11) becomes a predetermined rotation position ($\alpha$3) located farther in the closing direction (A2) than the first rotation position ($\alpha$1).

2.  The motorcycle (1) according to claim 1,
    wherein
    the speed limiter stopping device (34) is configured to turn off the speed limiter (32) when the rotation position of the accelerator grip (11) becomes the second rotation position ($\alpha$2).

3.  The motorcycle (1) according to any one of claims 1 to 2,
    wherein

    the accelerator grip (11) is configured to be rotatable farther in the opening direction than the second rotation position (a2), and
    the speed limiter stopping device (34) is configured to turn off the speed limiter (32) when the rotation position of the accelerator grip (11) becomes a predetermined rotation position ($\alpha$4) located farther in the opening direction (A1) than the second rotation position ($\alpha$2).

4.  The motorcycle (1) according to any one of claims 1 to 3,
    wherein
    the speed limiter stopping device (34) is configured to turn off the speed limiter (32) when a change amount ($\beta$) of the rotation position of the accelerator grip (11) per unit time becomes a preset threshold ($\beta$c) or more.

5.  The motorcycle (1) according to any one of claims 1 to 4,

wherein
the speed limiter stopping device (34) is configured to turn off the speed limiter (32) when the rotation position of the accelerator grip (11) changes in the opening direction (A1) by a preset change amount (k1) or more and then changes in the closing direction (A2) by a preset change amount (k2) or more within a preset specified time (Δt).

6. The motorcycle (1) according to any one of the foregoing claims, further comprising:

a cruise controller (35) configured to control the driving source (5) such that the vehicle speed is constant set vehicle speed;
a selection switch (41) configured to select a normal operation, a cruise control operation, or a speed limit operation; and
a set switch (42) configured to turn on the cruise controller (35) when being operated while the cruise control operation is selected and turn on the speed limiter (32) when being operated while the speed limit operation is selected.

7. The motorcycle (1) according to claim 6, further comprising:

a handle bar (7) extending to left and right;
a left grip (12) provided in a left end portion of the handle bar (7); and
a switch box (13) arranged rightward of the left grip (12) and leftward of a vehicle center line (CL) in the handle bar (7),
wherein
the accelerator grip (11) is provided in a right end portion of the handle bar (7), and
the selection switch (41) and the set switch (42) are provided in the switch box (13).


**Patentansprüche**

1. Motorrad (1), umfassend:

eine Antriebsquelle (5), die dazu konfiguriert ist, ein Drehmoment abzugeben, das ein Antriebsrad antreibt (3);
einen Beschleunigergriff (11), der von einem Fahrer betätigt wird und zumindest zwischen einer ersten Drehposition (α1) und einer zweiten Drehposition (α2) in einer Öffnungsrichtung (A1), die eine Drehrichtung von der ersten Drehposition (α1) zu der zweiten Drehposition (α2) ist, und in einer Schließrichtung (A2), die eine Drehrichtung von der zweiten Drehposition (α2) zu der ersten Drehposition (α1) ist, drehbar ist;
ein Erregungselement (14), das dazu konfiguriert ist, den Beschleunigergriff (11) in Richtung der ersten Drehposition (α1) zu erregen;
einen Beschleunigungsdetektor (21), der dazu konfiguriert ist, eine Drehposition des Beschleunigergriffs (11) zu ermitteln;
einen Fahrzeuggeschwindigkeitsdetektor (22), der dazu konfiguriert ist, die Fahrzeuggeschwindigkeit zu ermitteln;
eine Antriebsquellensteuerung (31), die dazu konfiguriert ist, die Antriebsquelle (5) auf der Grundlage der Drehposition des Beschleunigergriffs (11) so zu steuern, dass das Ausgangsdrehmoment der Antriebsquelle (5) minimal ist, wenn die Drehposition des Beschleunigergriffs (11) die erste Drehposition (α1) ist, und dass das Ausgangsdrehmoment der Antriebsquelle (5) maximal ist, wenn die Drehposition des Beschleunigergriffs (11) die zweite Drehposition (α2) ist; und
einen Geschwindigkeitsbegrenzer (32), der dazu konfiguriert ist, das Ausgangsdrehmoment der Antriebsquelle (5) so zu begrenzen, dass die Fahrzeuggeschwindigkeit eine Obergrenze nicht überschreitet; und
eine Geschwindigkeitsbegrenzer-Stoppvorrichtung (34), die dazu konfiguriert ist, den Geschwindigkeitsbegrenzer (32) auf der Grundlage der Drehposition des Beschleunigergriffs (11) auszuschalten;
**dadurch gekennzeichnet, dass** der Beschleunigergriff (11) dazu konfiguriert ist, in der Schließrichtung (A2) weiter als die erste Drehposition (α1) drehbar zu sein, und
die Geschwindigkeitsbegrenzer-Stoppvorrichtung (34) dazu konfiguriert ist, den Geschwindigkeitsbegrenzer (32) auszuschalten, wenn die Drehposition des Beschleunigergriffs (11) eine vorgegebene Drehposition (α3) einnimmt, die weiter in der Schließrichtung (A2) angeordnet ist als die erste Drehposition (α1).

2. Motorrad (1) nach Anspruch 1, wobei
die Geschwindigkeitsbegrenzer-Stoppvorrichtung (34) dazu konfiguriert ist, den Geschwindigkeitsbegrenzer (32) auszuschalten, wenn die Drehposition des Beschleunigergriffs (11) die zweite Drehposition ($\alpha$2) einnimmt.

3. Motorrad (1) nach einem der Ansprüche 1 bis 2, wobei

der Beschleunigergriff (11) dazu konfiguriert ist, in der Öffnungsrichtung weiter als die zweite Drehposition ($\alpha$2) drehbar zu sein, und
die Geschwindigkeitsbegrenzer-Stoppvorrichtung (34) dazu konfiguriert ist, den Geschwindigkeitsbegrenzer (32) auszuschalten, wenn die Drehposition des Beschleunigergriffs (11) eine vorgegebene Drehposition ($\alpha$4) einnimmt, die weiter in der Öffnungsrichtung (A1) angeordnet ist als die zweite Drehposition ($\alpha$2).

4. Motorrad (1) nach einem der Ansprüche 1 bis 3, wobei
die Geschwindigkeitsbegrenzer-Stoppvorrichtung (34) dazu konfiguriert ist, den Geschwindigkeitsbegrenzer (32) auszuschalten, wenn ein Änderungsbetrag ($\beta$) der Drehposition des Beschleunigergriffs (11) pro Zeiteinheit einen voreingestellten Schwellenwert ($\beta$c) oder mehr einnimmt.

5. Motorrad (1) nach einem der Ansprüche 1 bis 4, wobei
die Geschwindigkeitsbegrenzer-Stoppvorrichtung (34) dazu konfiguriert ist, den Geschwindigkeitsbegrenzer (32) auszuschalten, wenn sich die Drehposition des Beschleunigergriffs (11) in der Öffnungsrichtung (A1) um einen voreingestellten Änderungsbetrag (k1) oder mehr ändert und sich dann in der Schließrichtung (A2) um einen voreingestellten Änderungsbetrag (k2) oder mehr innerhalb einer voreingestellten bestimmten Zeit ($\Delta$t) ändert.

6. Motorrad (1) nach einem der vorhergehenden Ansprüche, des Weiteren umfassend:

einen Tempomat (35), der dazu konfiguriert ist, die Antriebsquelle (5) so regeln, dass die Fahrzeuggeschwindigkeit eine konstante Sollgeschwindigkeit ist;
einen Auswahlschalter (41), der dazu konfiguriert ist, einen Normalbetrieb, einen Tempomatbetrieb oder einen Geschwindigkeitsbegrenzungsbetrieb auszuwählen; und
einen Einstellschalter (42), der dazu konfiguriert ist, den Tempomat (35) einzuschalten, wenn er betätigt wird, während der Tempomat ausgewählt ist, und den Geschwindigkeitsbegrenzer (32) einzuschalten, wenn er betätigt wird, während der Geschwindigkeitsbegrenzungsbetrieb ausgewählt ist.

7. Motorrad (1) nach Anspruch 6, des Weiteren umfassend:

eine nach links und rechts verlaufende Lenkstange (7);
einen linken Griff (12), der in einem linken Endabschnitt der Lenkstange (7) vorgesehen ist; und
einen Schaltkasten (13), der rechts vom linken Griff (12) und links von einer Fahrzeugmittellinie (CL) in der Lenkstange (7) angeordnet ist, wobei
der Beschleunigergriff (11) in einem rechten Endabschnitt der Lenkstange (7) vorgesehen ist, und
der Auswahlschalter (41) und der Einstellschalter (42) im Schaltkasten (13) untergebracht sind.

**Revendications**

1. Motocyclette (1) comprenant :

une source motrice (5) configurée pour délivrer un couple qui entraîne une roue motrice (3) ;
une poignée d'accélérateur (11) actionnée par un pilote et pouvant tourner au moins entre une première position de rotation ($\alpha$1) et une seconde position de rotation ($\alpha$2) dans un sens d'ouverture (A1) qui est un sens de rotation de la première position de rotation ($\alpha$1) à la seconde position de rotation ($\alpha$2) et dans un sens de fermeture (A2) qui est un sens de rotation de la seconde position de rotation ($\alpha$2) à la première position de rotation ($\alpha$1) ;
un élément d'excitation (14) configuré pour exciter la poignée d'accélérateur (11) vers la première position de rotation ($\alpha$1) ;
un détecteur d'accélérateur (21) configuré pour détecter une position de rotation de la poignée d'accélérateur (11) ;
un détecteur de vitesse du véhicule (22) configuré pour détecter la vitesse du véhicule;
un contrôleur de source motrice (31) configuré pour contrôler la source motrice (5), en fonction de la position de rotation de la poignée d'accélérateur (11), de sorte que, lorsque la position de rotation de la poignée d'accélérateur (11) est la première position de rotation ($\alpha$1), le couple de sortie de la source motrice (5) est minimum et, lorsque la position de rotation de la poignée d'accélérateur (11) est la seconde position de rotation (a2), le couple de sortie de la source motrice (5) est maximum ; et

un limiteur de vitesse (32) configuré pour limiter le couple de sortie de la source motrice (5) de sorte que la vitesse du véhicule ne dépasse pas une limite supérieure ; et

un dispositif d'arrêt du limiteur de vitesse (34) configuré pour désactiver le limiteur de vitesse (32), en fonction de la position de rotation de la poignée d'accélérateur (11) ;

**caractérisé en ce que** la poignée d'accélérateur (11) est configurée pour tourner plus loin dans le sens de fermeture (A2) que la première position de rotation ($\alpha$1), et

le dispositif d'arrêt du limiteur de vitesse (34) est configuré pour désactiver le limiteur de vitesse (32) lorsque la position de rotation de la poignée d'accélérateur (11) devient une position de rotation prédéterminée ($\alpha$3) située plus loin dans le sens de fermeture (A2) que la première position de rotation ($\alpha$1).

la première position de rotation ($\alpha$1).

2. Motocyclette (1) selon la revendication 1,
dans laquelle
le dispositif d'arrêt du limiteur de vitesse (34) est configuré pour désactiver le limiteur de vitesse (32) lorsque la position de rotation de la poignée d'accélérateur (11) devient la seconde position de rotation ($\alpha$2).

3. Motocyclette (1) selon l'une des revendications 1 à 2,
dans laquelle

la poignée d'accélérateur (11) est configurée pour pouvoir tourner plus loin dans la direction d'ouverture que la seconde position de rotation (a2), et

le dispositif d'arrêt du limiteur de vitesse (34) est configuré pour désactiver le limiteur de vitesse (32) lorsque la position de rotation de la poignée d'accélérateur (11) devient une position de rotation prédéterminée ($\alpha$4) située plus loin dans la direction d'ouverture (AI) que la seconde position de rotation ($\alpha$2).

4. Motocycle (1) selon l'une quelconque des revendications 1 à 3,
dans laquelle
le dispositif d'arrêt du limiteur de vitesse (34) est configuré pour désactiver le limiteur de vitesse (32) lorsqu'une quantité de changement (3) de la position de rotation de la poignée d'accélérateur (11) par unité de temps devient un seuil prédéfini ($\beta$C) ou plus.

5. Motocycle (1) selon l'une des revendications 1 à 4,
dans laquelle
le dispositif d'arrêt du limiteur de vitesse (34) est configuré pour désactiver le limiteur de vitesse (32) lorsque la position de rotation de la poignée d'accélérateur (11) change dans le sens d'ouverture (A1) d'une valeur de changement prédéfinie (k1) ou plus, puis change dans le sens de fermeture (A2) d'une valeur de changement prédéfinie (k2) ou plus au cours d'un temps spécifié prédéfini ($\Delta$t).

6. Motocyclette (1) selon l'une quelconque des revendications précédentes, comprenant en outre :

un régulateur de vitesse (35) configuré pour contrôler la source de conduite (5) de manière à ce que la vitesse du véhicule soit constante ;

un interrupteur de sélection (41) configuré pour sélectionner un fonctionnement normal, un fonctionnement de régulation de vitesse ou un fonctionnement de limitation de vitesse ; et

un interrupteur de réglage (42) configuré pour mettre en marche le régulateur de vitesse (35) lorsqu'il est actionné alors que le fonctionnement du régulateur de vitesse est sélectionné et pour mettre en marche le limiteur de vitesse (32) lorsqu'il est actionné alors que le fonctionnement de la limitation de vitesse est sélectionné.

7. Motocyclette (1) selon la revendication 6, comprenant en outre :

un guidon (7) s'étendant vers la gauche et la droite ;
une poignée gauche (12) située à l'extrémité gauche du guidon (7) ; et
une boîte de commutation (13) disposée à droite de la poignée gauche (12) et à gauche de la ligne centrale du véhicule (CL) dans le guidon (7),

dans laquelle
la poignée d'accélérateur (11) est située à l'extrémité droite du guidon (7), et

le interrupteur de sélection (41) et l'interrupteur de réglage (42) sont placés dans le boîtier de commutation (13).

FIG.1

EP 3 974 274 B1

# FIG.2

## FIG.3

7

CL

20

43 44

41 13 42

12

14

11

A1 A2

## FIG.4

20

51

54

52

55

123
km/h

N

50 56 53

FIG.5

FIG.6

*FIG.7*

*FIG.8*

## FIG.9

21 — ACCELERATOR SENSOR

22 — VEHICLE SPEED SENSOR

23 — ROTATION SPEED SENSOR

24 — THROTTLE SENSOR

25 — GEAR POSITION SENSOR

26 — BANK ANGLE SENSOR

41 — SELECTION SWITCH

42 — SET SWITCH

43 — UP SWITCH

44 — DOWN SWITCH

30

CPU — 30A
ROM — 30B
RAM — 30C

15 — IGNITION DEVICE

16 — FUEL INJECTOR

17 — ELECTRIC THROTTLE VALVE

20 — INDICATOR

**FIG.10**

*FIG.11*

*FIG.12*

## FIG.13

## FIG.14

FIG.15

# FIG.16

*FIG.17*

*FIG.18*

FIG.19

FIG.20

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010247681 A
- JP 2009257270 A
- US 2018354515 A
- EP 2241498 A
- DE 102014017522 A
- US 2007293103 A